Europäisches Patentamt

(19) European Patent Office

Office européen des brevets

(11) Publication number: **0 107 203**
**B1**

(12) **EUROPEAN PATENT SPECIFICATION**

(45) Date of publication of patent specification: **27.01.88**

(21) Application number: **83110615.8**

(22) Date of filing: **24.10.83**

(51) Int. Cl.⁴: **G 06 F 12/02, H 04 N 7/13, H 04 N 5/76**

(54) **Method of and device for storing three-dimensional digital signals subjected to orthogonal transformation.**

(30) Priority: **25.10.82 IT 6823782**

(43) Date of publication of application:
**02.05.84 Bulletin 84/18**

(45) Publication of the grant of the patent:
**27.01.88 Bulletin 88/04**

(84) Designated Contracting States:
**DE FR GB NL SE**

(56) References cited:

**1976 INTERNATIONAL ZURICH SEMINAR ON DIGITAL COMMUNICATIONS, 9th-11th March 1976, Zurich, pages B7.1-B7.6, IEEE, New York, US; W. FAWER: "The picture memory and its influence on some functions of a display telephone"**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Corgnier, Luigi**
**Via Susa, 19**
**Turin (IT)**
Inventor: **Guglielmo, Mario**
**Montalenghe (TO) (IT)**
Inventor: **Riolfo, Benedetto**
**Via Ticineto, 5**
**Turin (IT)**

(74) Representative: **Riederer Freiherr von Paar zu Schönau, Anton et al**
**Van der Werth, Lederer & Riederer Freyung 615**
**Postfach 2664**
**D-8300 Landshut (DE)**

Courier Press, Leamington Spa, England.

## Description

The present invention relates to digital-signal storage systems and in particular it concerns a method of and a device for storing three-dimensional digital signals, already bidimensionally transformed, subjected to the transformation along the third dimension.

The analysis of such digital signals generally allows the three following dimensions to be specified:

—horizontal dimension: a succession of samples forming a row;

—vertical dimension: a succession of rows forming a group;

—time dimension: a succession of groups.

By way of non-limiting example the case will be considered of image signals, yet it is clear that the method provided by the present invention can be extended to any signal with a three-dimensional structure to which a three-dimensional transform is to be applied.

Owing to the way in which TV-recording devices scan a scene and to the continuous and regular repetition of said operation, the image signal can be assigned a three-dimensional structure in which the points of a line form the horizontal dimension, the lines of a frame form the vertical dimension and the frames form the time dimension, considered hereinafter as third dimension.

The correlation between adjacent points in this three-dmimensional space can be exploited in the best possible way by the application of three-dimensional transforms, which requires the storage of signal samples for the duration of a number of frames.

In fact the effectuation of the transform in the time dimension requires the reading from the memory of samples having corresponding indices and belonging to a number Z of successive frames, while the samples are available for writing in the memory in time sequence; hence the order in which they are read does not coincide with the order in which they have been written. Consequently the arriving information cannot be written in the memory positions just left free by a reading operation, keeping the address formation law unchanged.

The simplest solution may be that of increasing the memory capacity so that it can contain at least 2 Z—1 frames. In this way it is easy to verify that the cyclical reading and writing take place without data superposition; yet the apparatus complexity and cost are increased.

A second solution could be that of re-writing the arriving new data in the positions which have just been left free by the reading, obviously changing the address formation law both in writing and reading at each completion of the time transform of a series of Z frames. In this way a sequential addressing is no longer possible, but a series of iterations is to be set up for the cyclical formation of writing and reading addresses.

This latter task is solved by the present invention of a method of storing the two-dimensionally transformed samples which allows the use of a memory which only contains just the samples of Z frames and which uses only two different laws of formation of reading and writing addresses.

It is a particular object of the present invention to provide a method of storing three-dimensional digital signals subjected to orthogonal transformation as defined in claim 1.

It is a further object of the present invention to provide a storing device for implementing the method, as defined in claim 2. Said device has a total memory capacity such that it contains the samples of Z frames and is implemented so as to solve further problems depending on the technololgy reached now in the building up of memory units. In fact fastest memories which are now commercially available have an access time 2 to 4 times higher than the production time of new samples to be memorized: this doesn't allow the memories to be written at the sampling frequency of about 10 MHz. Futhermore said memories are of the dynamic type hence the stored data are to be cyclically refreshed, in order to avoid cancellation.

Since in such memories and reading/writing operation, even though relative to a cell, serves just to "refresh" the data present on the whole line comprising the cell, then the samples are to be memorized in a way such that the reading and writing operations might involve with the same cyclicity all the lines of all the memories.

The invention will now be described with reference to the annexed drawings in which:

—Figures 1a and 1b are a representation useful to better understand the method object of the invention;

—Fig. 2 shows the scheme of a transmitter which uses the storing device object of the invention;

—Fig 3 is the circuit diagram of the block AG of Fig. 2;

—Fig. 4 is the circuit scheme of block MEM of Fig. 2;

—Fig. 5 is the detail scheme of block MM1 of Fig. 4;

—Fig. 6 shows the trend in time of a number of signals applied to block MM1 of Fig. 4;

—Figures 7 and 8 show the arrangement of the samples written in memory MEM of Fig. 4.

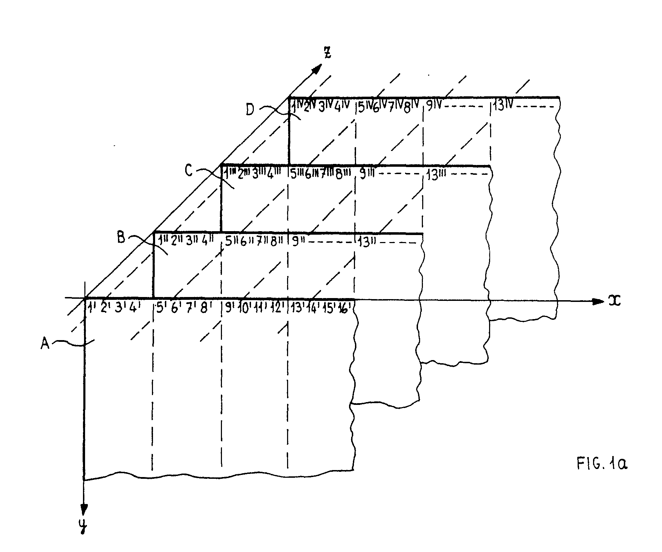

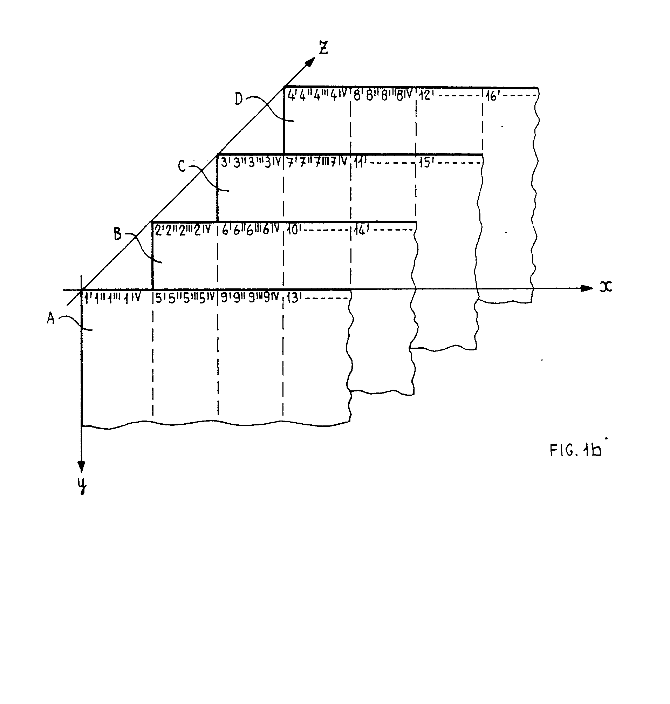

The method provided by the present invention will be now described with reference to Figures 1a and 1b.

Let us suppose the presence of a source producing samples h of the image signal with a sequence which is that of the normal scanning of the TV signal.

It has already been mentioned that a three-dimensional structure can be attributed to the image signal and said three-dimensions have been identified.

Let us suppose that a two-dimensional transform, along the already-defined horizontal and vertical dimensions, is to be applied to the samples h of each frame, so as to obtain a number X of transformed samples K per each image line; let us also suppose each frame to contain Y rows.

Let us suppose now that transformation along the third (time) dimension of samples K is to take place. For this operation, samples K, belonging to a number Z of successive frames and having corresponding positions inside each frame, have to be simultaneously available.

Then, to begin the transform operation along the third dimension, a number of samples K at least equal to $X \cdot Y \cdot Z$ are to be memorized.

As it can be seen from Figures 1a and 1b, a three-dimensional memory structure is created: axis x identifies the horizontal dimension, axis y the vertical dimension and axis z the time dimension.

Z memory planes crossing axis, z, one per each frame, are identified; each memory plane is dimensioned so that it can contain $X \cdot Y$ samples K.

In Figures 1a, 1b samples K are indicated by progressive numbers whose superscripts indicate in roman numerals the frame they belong to: e.g. number $1^I$ indicates the first sample of the first frame; number $1^{IV}$ indicates the first sample of the fourth frame; $5^{II}$ indicates the fifth sample of the second frame and so on.

In the particular non-limiting example described here Z=4 has been chosen, that is the three dimensional transform is effected considering the samples belonging to four successive frames.

According to the method here suggested, samples K are written in the memory in the cells just let free by a reading operation, according to only two simple arrangement configurations.

A first configuration is that represented in Fig. 1a and is obtained with an addressing of the memories hereinafter referred to as first addressing mode: samples K are sequentially written in successive memory-locations along the increasing directions: x, then y and finally z. At the end of the writing operations all the samples of the first frame will be contained in plane A, those of the second frame in plane B, those of the third in plane C, those of the fourth in plane D.

These writing operations are followed by reading operations of samples of corresponding positions of the four planes, making x vary by steps equal to Z.

Then the samples are read in the following sequence: $1^I, 1^{II}, 1^{III}, 1^{IV}; 5^I, 5^{II}, 5^{III}, 5^{IV}; 9^I, 9^{II}...$ and so on, up to the end of the row.

Then the subsequent row is addressed (y is incremented by one) and read with the same order as the preceding row. Once the end of row Y is reached, the first row is addressed again, reading, still with steps of Z along x, the samples $2^I, 2^{II}, 2^{III}, 2^{IV}; 6^I, 6^{II}, 6^{III}, 6^{IV}; 10^I, 10^{II}...$ and so on, up to the completion of all the samples of the four planes.

Hence these reading operations occur with priority of direction z, followed by direction x by steps of Z, and by direction y, on the basis of an addressing hereinafter referred to as second addressing mode.

Each of these reading operations is immediately followed by a writing operation, still on the basis of said second addressing mode, of new samples K relating to the subsequent set of four frames, obtaining a second configurations represented in Figure 1b: the corresponding samples of the 4 frames having a progressive number varying by steps of Z are present on a determined plane. Hence samples $1^I, 1^{II}, 1^{III}, 1^{IV}; 5^I, 5^{II}, 5^{III}, 5^{IV}; 9^I, 9^{II}...$ are present in plane A; samples $2^I, 2^{II}, 2^{III}, 2^{IV}; 6^I, 6^{II}, 6^{III}, 6^{IV}; 10^I,...$ on plane B; samples $3^I, 3^{II}, 3^{III}, 3^{IV}; 7^I, 7^{II}, 7^{III}, 7^{IV}; 11^I...$ on plane C; samples $4^I, 4^{II}, 4^{III}, 4^{IV}; 8^I, 8^{II}, 8^{III}, 8^{IV}; 12^I,...$ on plane D, and so on.

The following series of reading operations takes place according to the normal sequential order, that is according to the first addressing mode, with priority of direction x, then of y and finally of z.

Obviously each reading is immediately followed by the writing of samples coming from the source, hence once the writing is completed the arrangement shown in Fig. 1a is obtained again.

Then in the steady state a sequence of reading and writing operations is obtained according to the first addressing mode, followed by reading and writing operations according to the second addressing mode.

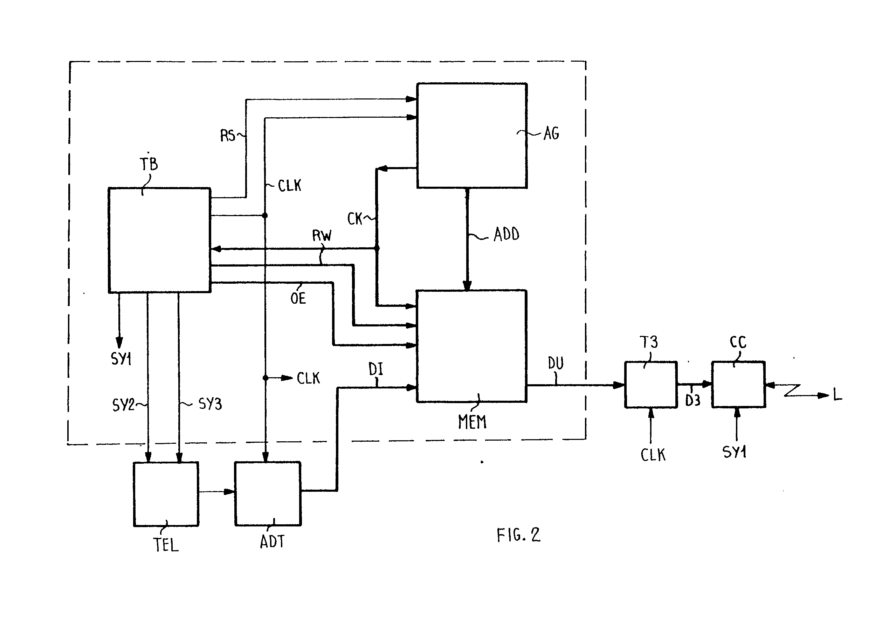

Fig. 2 shows an example of use of the storage device, provided by the invention, represented in dashed lines in the Figure, in a transmitter of three-dimensionally transformed image-signals.

In a complete transmission system also the receiving section, not shown in the Figure, comprises a storage device equal to that of the transmitter TB indicates the circuit block performing as time base.

TB generates ordinary signals of line and frame synchronization, respectively on wires SY2 and SY3, for block TEL consisting of an ordinary television camera.

In addition TB sends onto connection SY1 towards block CC a synchronisation word, whose composition is determined according to the particular protocol of known type used for the transmission.

In addition this word is to synchronize the transmitter memory with the receiver memory.

TB generates the various timing signals for blocks AG and MEM, which will be examined hereinafter, and sends on wire RS an ordinary initialization signal and on wire CLK the basic timing signal.

Furthermore TB, depending on the signals present on connection CK coming from AG, generates on connections RW and OE the control signals for block MEM.

The trend in time and the function of the signals on connections CK, RW, and OE will be described hereinafter.

AG denotes the block capable of generating the addresses supplied at the output on bus ADD.

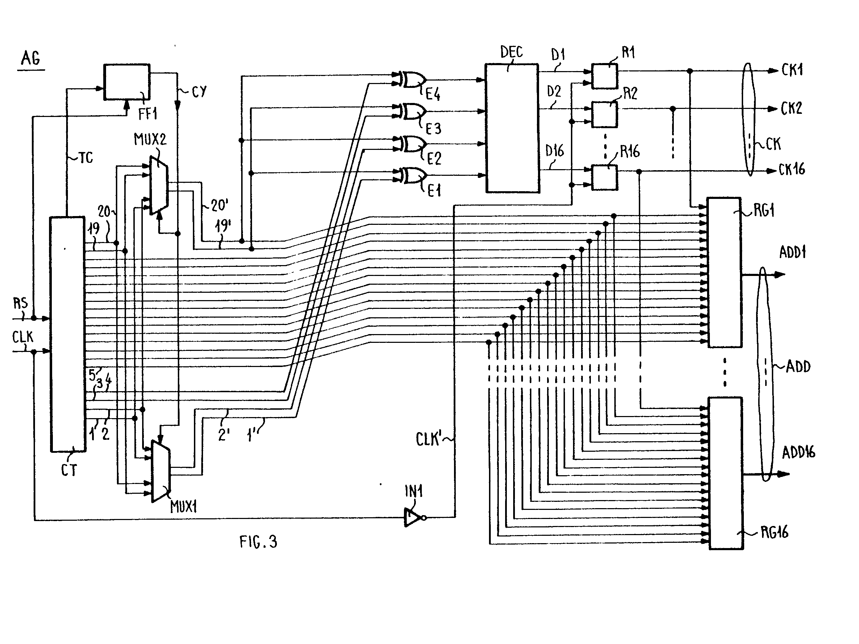

Block AG will be described in detail in connection with Fig. 3.

MEM indicates the block carrying out the task of storing the digital samples arriving on bus DI from a block ADT.

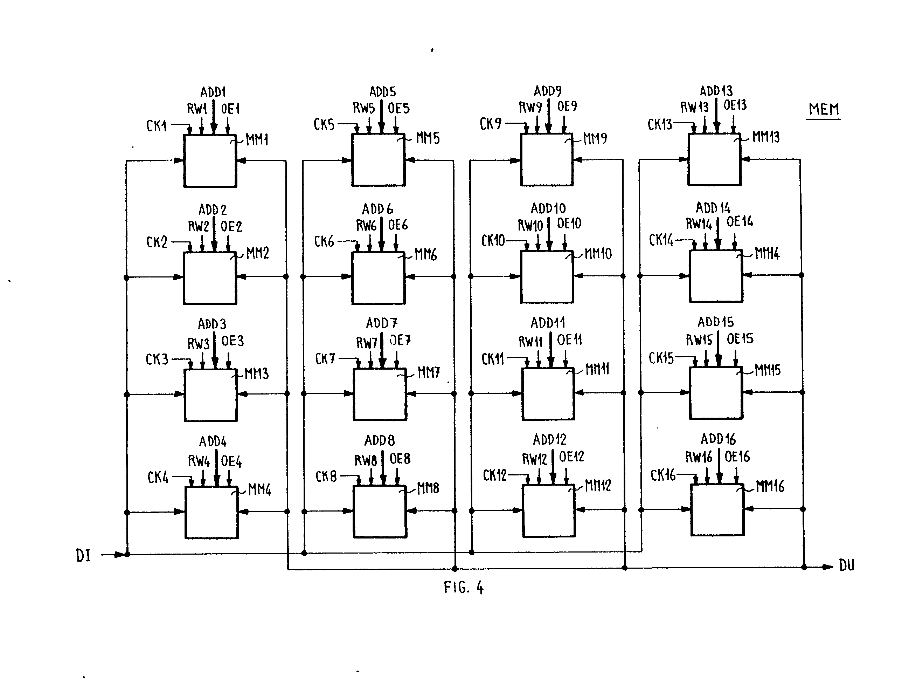

MEM receives the addresses on the bus ADD and supplies the digital samples at the output on bus DU. Block MEM will be described in detail in connection with Fig. 4.

Block ADT is an ordinary analog-to-digital converter of the video-signal coming from television camera TEL.

In addition ADT calculates the two-dimensional transform of the digital samples along horizontal and vertical directions previously defined, thus obtaining transformed samples which are sent on bus DI towards MEM.

ADT is synchronized by signal CLK coming from TB.

The samples on bus DU are sent to block T3 which calculates the transform along the previously-defined third (time) dimension and sends at the output the coefficients of said transform on bus D3 towards block CC.

T3 is synchronized by signal CKL coming from TB.

Block CC is the interface with the digital transmission line: it performs the channel digital coding of the data coming from bus D3, and of the synchronism words coming from connection SY1 and makes the trasmission on line L.

The structure of block CC is basically known and depends on the particular organization of data to be transmitted and hence on the transmission protocol chosen.

Fig. 3 shows the circuit scheme of block AG.

CT indicates a usual 20 bit binary counter clocked by the signal CKL and initialized by the signal on wire RS; wires CLK and RS arrive from time base TB of Fig. 2.

CT sequentially counts, and supplies at each counting step the result at the ouput on the wires indicated by progressive numbering from 1 to 20, function of the bit weight; wire 1 carries the least significant bit, wire 20 the most significant bit (wires from 6 to 18 due to space reasons, do not carry the indication of the number which is to be intended as progressively increasing from the bottom up).

The maximum number calculated by CT is reached every Z frames; at such instants CT emits an end-of-count signal on wire TC; after it restarts for the subsequent counting.

In the non-limiting example described here 20 address bits are provided since, under the hypothesis that four image frames be stored, 2 bits are required to specify the frame and 18 bits to address 512×512 positions corresponding to the total number of samples produced per each frame.

The signal on wire TC is supplied at the input of flip-flop FF1 which supplies over wire CY at the output a signal whose frequency is half the frequency of the input signal and which therefore changes its state every Z frames.

Wire CY is connected to the control input of two equal 4-input and 2-ouput multiplexers MUX1 and MUX2.

Both MUX1 and MUX2 receive wires 1, 2, 19, 20 at the inputs. One of the two logic levels on CY conrols the connection, by MUX1, of the inputs 1, 2 with the outputs 1', 2' respectively and, by MUX2, of inputs 19, 20 with the outputs 19', 20' respectively; on the contrary the other logic state on CY controls the connection, by MUX1, of inputs 19, 20 with the outputs 1', 2' and by MUX2 of the inputs 1, 2 with the outputs 19', 20'.

Wire 19' is connected to the first input of the two EX-OR circuits E1, E3, while wire 20' is connected to the first input of two EX-OR circuits E2, E4. Wires 1', 2', 3, 4 are connected to the second input of E1, E2, E3, E4 respectively, whose outputs are applied to the corresponding inputs of block DEC.

The outputs of E1,...E4 represent a 4-bit binary number (from 0000 to 1111) from the least significant bit, present at the output of E1, to the most significant bit, present at the output of E4.

Block DEC is an ordinary decoder which converts the binary numbers present at its four inputs into enable signals on its 16 outputs D1..., D16 (if by instance it receives the binary number 2, it will enable the output D3).

The 16 outputs of DEC are applied to blocks R1, R2,...R16 respectively, consisting of ordinary 1-bit registers. Said registers are clocked by the signal on wire CLK' which consists of the signal on wire CLK coming from TB (Fig. 2) duly delayed, so as to take into account the delay introduced by blocks MUX1, MUX2, E1 to E4, DEC and inverted by inverter IN1. R1, R2,...R16 supply at the output the signals over wires CK1, CK2,...CK16 respectively, forming connection CK.

Blocks RG1, RG2,...RG16 are ordinary registers each of 16 bits and they serve, as it will be seen hereinafter, to supply the addresses to the corresponding memory banks of block MEM (Fig. 2).

Each of them receives at its inputs wires 5,...18, 19' and 20' which carry the bits with an increasing weight order in function of the wire number hence they form a 16-bit binary number.

Registers RG1,...RG16 supply the addresses at the outputs on buses ADD1... ADD16 respectively, which form bus ADD.

Said registers keep a determined address configuration for the whole time elapsing between two subsequent pulses present on the corresponding timing inputs to which the signals present on wires CK1, CK2,...CK16 are respectively applied.

Fig. 4 shows the circuit scheme of the block MEM of Fig. 2 which stores the samples coming from block ADT through bus D1.

MEM consists of equal memory units indicated by MM1... MM16. Said units form a square matrix composed of Z lines and Z columns.

In the example of embodiment described here, since Z=4, there are 16 memory units.

The total memory capacity of MEM is of four sample frames, equal to that of the planes of Fig. 1a, 1b.

Each unit receives at the input the samples from bus DI and supplies the samples at the output on bus DU. Buses DI, DU are composed of 8 wires, as the samples are of 8-bit each.

MM1,... MM16 receive respectively: the addresses on buses ADD1...ADD16 forming the bus ADD; the control signals on wires CK1,...CK16 forming the connection CK; signals over wires RW1, RW16, forming connection RW; the signals on wires OE1...OE16 forming connection OE.

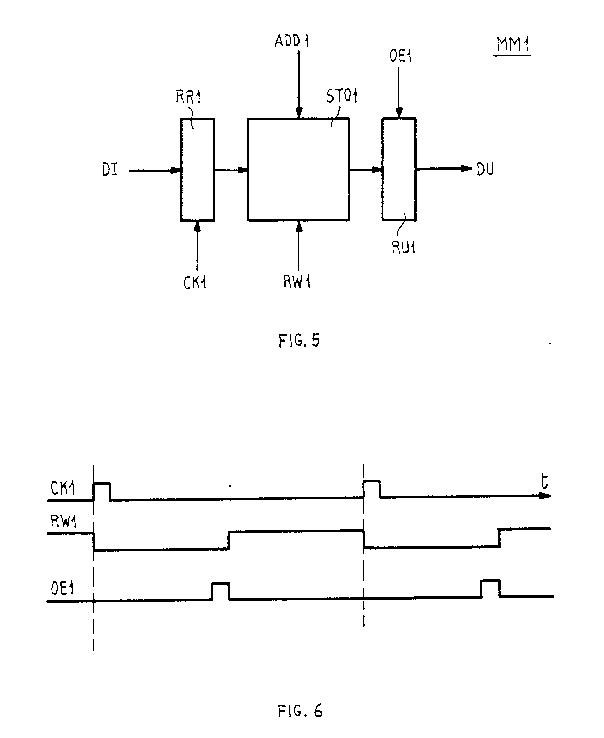

The structure of unit MM1 is described hereinafter with reference to Figures 5 and 6: it is clear that what will be mentioned applies also to the other units from MM2 to MM16.

Unit MM1 is composed of: a 64-kbit dynamic-RAM memory unit STO1; a register RR1 for the temporary storage of data present on bus DI; a register RU1 for temporary storage of data to be sent to the output on bus DU.

Register RR1 stores the data present on bus DI when the clock signal on wire CK1 coming from AG (Fig. 3) is active; at the subsequent writing signal on wire RW1 applied to STO1, data are transfered from RR1 into the cell of the memory element addressed by the bit configuration present on bus ADD1.

This writing operation is preceded by a reading of the data previously present in the same memory cell: the reading is controlled by the logic level on wire RW1 and occurs at the instant of presence of the clock pulse on wire OE1 applied to RU1 where the data outgoing from STO1 are temporarily stored.

The signals on wires CK1, RW1 OE1 are shown in Fig. 6.

In the example described here the low logic level for RW1 indicates a reading operation, while the high logic level indicates a writing operation.

According to what mentioned for registers RG1...RG16 (Fig. 3), it can be noted how in the time interval elapsing between two successive pulses on CK1, the address on bus ADD1 keeps constant and a reading and writing operation alternate in the same cell of STO1.

As already mentioned, the various signals over wires RW1,...RW16 and OE1,...OE16 are generated by time base TB (Fig. 2) on the basis of the various signals on wires CK1,...CK16 generated by block AG (Fig. 3).

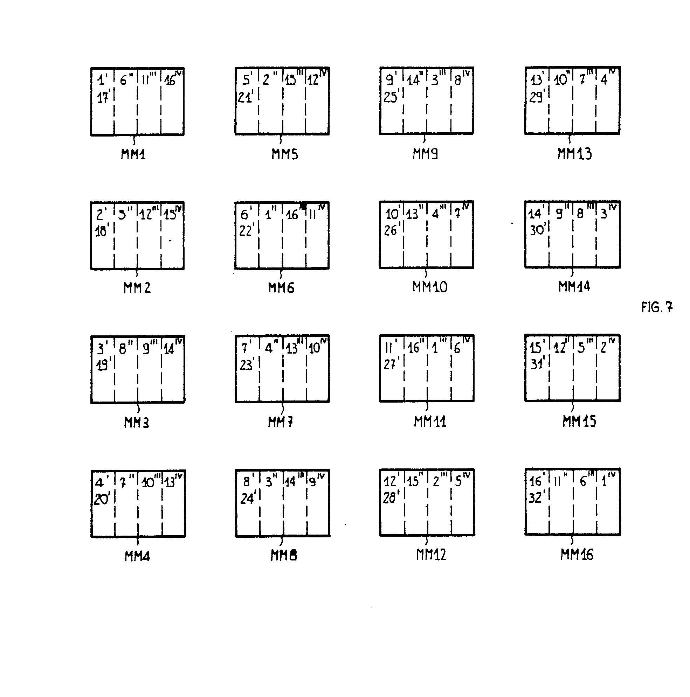

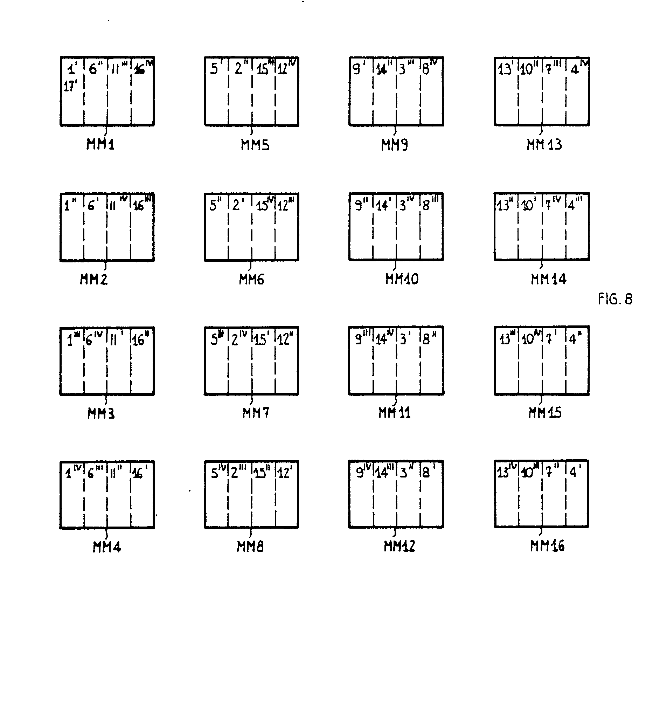

The operation of the storing device will be now described on the basis also of Figures 7 and 8 and taking into account Figures 1a and 1b relating to the method.

Time base TB (Fig. 2) controls the operation of TV camera TEL and of converter and encoder ADT which sends on bus DI the two-dimensionally transformed samples K to be stored in memory MEM.

At the same time TB controls the generation of the addresses by AG on bus ADD towards MEM.

In Fig. 3 the set of blocks FF1, MUX1, MUX2, E1 to E4, DEC, R1 to R16 forms a logic circuit which serves to determine at each instant which memory block of Fig. 4 is to be addressed.

As mentioned, two addressing modes are available: the choice of the one or the other is determined by the logic level of signal CY supplied by FF1; it changes at each emission of the end-of-counting signal TC, i.e. at the end of the scanning of 4 frames.

In the time intervals in which the first addressing mode is chosen, the logic level of CY is such that it is possible to keep the sequential order (downstream multiplexers MUX1 and MUX2) of generation of the addresses by CT, i.e. MUX2 will connect on the outputs 19', 20' the inputs 19, 20 respectively; MUX1 will connect on the outputs 1', 2' the inputs 1, 2 respectively. At the starting instant, i.e. in presence of the initialization signal over wire RS, the first addressing mode will be chosen: the first reading operation will have no practical effect, as the memories are all empty and hence, said operation could be possibly inhibited.

On the countrary, the subsequent writing phase of the samples into the various memory units MM1,... MM16 occurs in the order shown in Fig. 7.

The various samples K are still indicated with the same reference as that in Fig. 1a, 1b.

In particular it is worth noting that each memory unit of Fig. 7 is subdivded into four sectors, which in the drawing are represented by dashed lines and are developed in the vertical direction, samples on one frame being stored in each sector.

Consequently, one of the 4 sectors of all the memory units in Fig. 7 is made to correspond to each plane of memory of Fig. 1a.

Samples which in Fig. 1a belong to memory plane A, are stored in the first sectors of the memory units of Fig. 7; those of plane B in the second sectors, those of plane C in the third sectors, those of plane D in the fourth sectors.

It is to be noted from Fig. 3 that the four least significant bits present on wires 1', 2', 3, 4 are transferred to circuits E1, E4 (which determine the choice of which memory unit is to be addressed). Since at least one logic level of the configuration of said bits changes between one sample and the next, then successive samples of the same frame can be stored into different memory units.

In this way the problem is solved of the access time of each memory unit, which in commercially-available components is two to four times higher than the interval elapsing between the generation of two successive samples on bus DI.

However, the sequence of selection of different memory units is to be changed at each frame: which allows the above-mentioned access-time problem to be solved also during the time intervals in which the second address mode is selected, which will be mentioned hereinafter.

So doing the problem of the cyclical data "refreshing" in memory banks of dynamic-RAM type is solved since each row of the memory units is interested in a ready or writing operation with a frequency higher than the minimum frequency requested by the "refreshing".

This change of selection order is effected by sending to the second input of circuits E1...E4 the bits over wires 19', 20' (as shown in Fig. 3) which represent in the first addressing mode, the binary coding of the present frame number.

Once the just-described reading-writing operation is completed, a new reading-writing series begins in accordance with the second addressing mode.

The logic level of CY determines the connection of outputs 19', 20' of MUX2 with inputs 1, 2 respectively, and the connection of outputs 1', 2' of MUX1 with inputs 19, 20 respectively.

Even in this case consecutive samples are stored in different units and the selection order of the memory banks changes at each frame.

Each memory unit is still subdivided into four sectors and the new series of writing operations is such that the sample arrangement in the memory units of Fig. 8 can be related to that of memory planes of Fig. 1b.

In fact also in this case the samples, which in Fig. 1b belong to plane A, in Fig. 8 are in the first sector of the memory units; those of plane B in the second sector, those of plane C in the third, those of plane D in the fourth.

In addition, there is a one-to-one correspondence between each memory cell of planes A, B, C, D and each cell of the memory units MM1,..:MM16 in the two addressing modes. For instance the cell containing the sample $8^{II}$ during the first addressing mode contains the sample $6^{IV}$ during the second addressing mode, both in the planes of Figures 1a, 1b and in the units of Figures 7 and 8.

For both addressing modes the choice of the sector inside each unit is determined by the logic level on wires 19' and 20' which carry the most significant addressing bits of each individual bank, as they are connected to the most significant positions of the input of registers RG1...RG16.

It is worth noting how at the end of the writing operations corresponding to the second addressing mode, the new samples are written into the memory units so that, by resuming the first addressing mode after the new reading and writing operations, the arrangement of the new samples can be obtained according to that of Fig. 7.

## Claims

1. Method of storing three-dimensional digital signals subjected to orthogonal transformation along three dimensions hereinafter referred to as horizontal, vertical and time dimension, said signals consisting of digital samples, organized in bidimensional groups consisting of Y samples along the vertical dimension and of X samples along the horizontal dimension for each of the Y samples, for the transformation along the time dimension samples of corresponding positions of Z consecutive bidimensional groups having to be made available at the same time by carrying out a memory writing and reading operation, characterized in that the digital signals are written and read in from a memory organized in a three-dimensional memory structure composed of Z planes, each plane having a capacity of X · Y samples, according to a first and a second addressing mode alternating every Z-th group of samples, the reading operation of each of the stored samples belonging to the preceding Z groups being followed by a writing operation in the position just read of the sample at present available and belonging to the present Z groups; in said first mode consecutive positions along the increasing direction of each dimension being addressed in sequence; with priority of horizontal dimension followed by the vertical dimension and time dimension of the various planes; and in said second mode corresponding positions of the Z planes being addressed in sequence, wherein in total each plane is addressed Z times, each time along the increasing direction of each dimension of a group with priority of the horizontal dimension, starting from a n-th sample ($1 \leq n \leq Z$) and by steps of Z samples, followed by the vertical dimension, until all samples of each plane have been addressed.

2. Device for implementing the method of claim 1, characterized in that it comprises:
— storage means (MEM) implementing a three-dimensional memory structure composed of Z planes, each plane having a capacity of storing X · Y samples, and consisting of a plurality of equal memory units (MM1, ..., MM16) the memory cells of each of which are subdivided into Z sectors;
— addressing means (AG) for addressing said memory units alternately according to first and second addressing modes, in said first mode consecutive positions along the increasing direction of each dimension being addressed in sequence with priority of horizontal dimension followed by the vertical dimension and time dimension of the various planes, and in said second mode corresponding positions of the Z planes being addressed, wherein each plane is addressed Z times, each time along the increasing direction of each dimension, with priority of the horizontal dimension, starting from a n-th sample ($1 \leq n \leq Z$) and by steps of Z samples, followed by the vertical dimension, the addressing means (AG) by addressing said memory units, determining the subdivision of each memory unit into the Z different sectors and determining a biunivocal correspondence between the cells of the n-th memory plane and the cells of the n-th sectors of the memory units·($1 \leq n \leq Z$).

3. Device according to claim 2, characterized in that said memory units (MM1, ..., MM16) form a square matrix of Z lines and Z columns, and are addressed by said addressing means (AG) so that in corresponding sectors of the units of the single columns, according to the first addressing mode, there may be written consecutive samples of the same group, and according to the second addressing mode, there may be written samples of corresponding positions of Z successive groups.

4. Device according to claims 2 or 3, characterised in that for Z=4 said addressing means (AG) comprise:

—a modulo-X · Y · Z binary counter (CT) synchronized by the sample generation frequency, apt to supply at each instant at the outputs the binary coding of the number now reached in the counting and to supply at the output, each time it reaches the maximum value, an end-of-counting signal (TC), said binary coding being used for the addressing of the memory units;

—a flip-flop (FF1), which operates as a divider by two of said end-of-counting signal, to supply at the output a signal (CY) of selection of the addressing mode;

—a first multiplexer (MUX1) controlled by said signal (CY) of selection of the addressing mode, which presents at its most significant and least significant outputs respectively, during the first addressing mode the bits of the least significant positions of the outputs of said binary counter (CT), and during the second mode the bits of the most significant positions;

—a second multiplexer (MUX2) controlled by said signal (CY) of selection of the addressing mode, which presents at its most significant and least significant outputs respectively, during the first addressing mode the bits of the most significant positions of the outputs of said binary counter (CT), and during the second mode the bits of the least significant positions;

—a first EX-OR logic circuit (E1) which receives the least significant outputs of said first (MUX1) and second (MUX2) multiplexers;

—a second EX-OR logic circuit (E2) which receives the most significant outputs of said first (MUX1) and second (MUX2) multiplexers;

—a third EX-OR logic circuit (E3) which receives the least significant output of said second multiplexer (MUX2) and the output of the third position, in increasing weight order of said binary counter (CT);

—a fourth EX-OR logic circuit (E4) which receives the most significant output of said second multiplexer (MUX2) and the output of the fourth position, in increasing weight order, of said binary counter (CT);

—a binary-decimal decoder (DEC) which receives the outputs of said EX-OR logic circuits, said outputs forming a 4-character binary number from the least significant one carried by said first EX-OR circuit (E1) to the most significant one carried by said fourth EX-OR logic circuit (E4), said decoder (DEC) supplying at the outputs by means of registers (R1, ..., R16) selective control signals (CK1, ..., CK16) for said memory units (MM1, ..., MM16);

—hold registers (RG1, ..., RG16), enabled by said selective control signals (CK1, ..., CK16) for the memory units (MM1, ..., MM16) and able to supply, as addresses, to said memory units signals they receive at the inputs said input signals consisting, for all the hold registers, of the outputs of said binary counter (CT), with exception of the four least significant positions and the two most significant ones, and also consisting of the outputs of said second multiplexer (MUX2) as most significant positions.

**Pantentansprüche**

1. Verfahren zum Speichern dreidimensionaler digitaler Signale, die einer orthogonalen Transformation entlang drei Dimensionen, die im folgenden als horizontale, vertikale und Zeitdimension bezeichnet sind, unterworfen sind, wobei die Signale aus digitalen Abtastwerten bestehen, die in zweidimsionalen Gruppen organisiert sind, welche aus Y Abtastwerten entlang der vertikalen Dimension und X Abtastwerten entlang der horizontalen Dimension für jeden der Y Abtastwerte bestehen, und für die Transformation entlang der Zeit-Dimension die Z aufeinanderfolgenden zweidimensionalen Gruppen angehörenden Abtastwerte einander entsprechender Position gleichzeitig verfügbar gemacht werden müssen, indem Speicher-Schreib- und -Lesevorgänge durchgeführt werden, dadurch gekennzeichnet, daß die digitalen Signale in einen/aus einem Speicher geschrieben und gelesen werden, der in einer aus Z Ebenen, die jeweils eine Kapazität von X · Y Abtastwerten aufweisen, zusammengesetzten dreidimensionalen Speicherstruktur organisiert ist, und zwar gemäß einem ersten und einem zweiten Adressiermodus, die alle Z Gruppen von Abtastwerten alternieren; daß der Leseoperation für jeden der gespeicherten Abtastwerte, der den vorhergehenden Z Gruppen angehört, eine Schreiboperation des gegenwärtig verfügbaren und zu den gegenwärtigen Z Gruppen gehörenden Abtastwerts in der soeben ausgelesenen Position folgt; daß im ersten Modus aufeinanderfolgende Positionen entlang der ansteigenden Richtung jeder Dimension mit Priorität der horizontalen Dimension und dann der vertikalen Dimension und der Zeitdimension der verschiedenen Ebenen aufeinanderfolgend adressiert werden; und daß im zweiten Modus entsprechende Positionen der Z Ebenen aufeinanderfolgend adressiert werden, wobei jede Ebene insgesamt Z-mal adressiert wird, und zwar jedesmal in ansteigen der Richtung für jede Dimension einer Gruppe mit Priorität der horizontalen Dimension, wobei mit dem n-ten Abtastwert und in Schritten von Z Abtastwerten begonnen wird (1≤n≤Z), gefolgt von der vertikalen Dimension, bis alle Abtastwerte jeder Ebene adressiert worden sind.

2. Vorrichtung zur Durchführung des Verfahrens nach Anspruch 1, gekennzeichnet, durch:

—eine dreidimensionale Speicherstruktur ergebende Speichereinrichtungen (MEM), die aus Z Ebenen zusammengesetzt ist, von den jede eine Kapazität zum Speichern von X · Y Abtastwerten hat, und die aus einer Vielzahl gleicher Speichereinheiten (MEM1, ..., MEM16) besteht, deren jeweilige Speicherzellen in Z Sektoren unterteilt sind;

—eine Adressiereinrichtung (AG) zum Adressieren der Speichereinheiten alternierend nach einem ersten und einem zweiten Adressiermodus, wobei im ersten Modus aufeinanderfolgende Positionen in ansteigender Richtung jeder Dimension aufeinanderfolgend adressiert werden, und zwar mit Priorät der horizontalen Dimension, der die vertikale Dimension und die Zeitdimension der verschiebenen Ebenen folgen, und im zweiten Modus entsprechende Positionen der Z Ebenen adressiert werden, und zwar jede Ebene Z-mal, nämlich jedesmal in ansteigender Richtung jeder Dimension mit Priorität der horizontalen Dimension, anfangend vom n-ten Abtastwert ($1 \leq n \leq Z$) und in Schritten von Z Abtastwerten, gefolgt von der vertikalen Dimension, und wobei die Adressiereinrichtung (AG) durch das Adressieren der Speichereinheiten die Unterteilung jeder Speichereinheit in Z verschiedene Sektoren bestimmt und eine in beiden Richtungen eindeutige Zuordnung zwischen den Zellen der n-ten Speicherebene und den Zellen der n-ten Sektoren der Speichereinheiten ($1 \leq n \leq Z$) bestimmt.

3. Vorrichtung nach Anspruch 2, dadurch gekennzeichnet, daß die Speichereinheiten (MM1, ..., MM16) eine Quadratmatrix von Z Zeilen und Z Spalten bilden und von der Adressiereinrichtung (AG) so adressiert werden, daß in entsprechenden Sektoren der Einheiten der einzelnen Spalten gemäß dem ersten Adressiermodus aufeinanderfolgende Abtastwerte der selben Gruppe geschrieben werden können und gemäß dem zweiten Adressiermodus Abtastwerte entsprechender Positionen von Z aufeinanderfolgenden Gruppen geschrieben werden können.

4. Vorrichtung nach Anspruch 2 oder 3, dadurch gekennzeichnet, daß für Z=4 die Adressiervorrichtung (AG) folgende Einzelschaltungen umfaßt:

—einen Modulo-X · Y · Z-Binärzähler (CT), der mit der Frequenz der Erzeugung der Abtastwerte synchronisiert ist und zu jedem Zeitpunkt ausgangsseitig den binären Kodewert der nun durch die Zählung erreichten und am Ausgang abzugebenden Zahl und stets bei Erreichen des Maximalwerts ein Zählende-Signal (TC) abgibt, wobei der binäre Kodewert für die Adressierung der Speichereinheiten dient;

—einen Flip-Flop (FF1), der als Halbier-Teiler des Zählendesignals dient und ausgangsseitig ein Signal (CY) der Wahl des Adressiermodus abgibt;

—einen ersten Multiplexer (MUX1), der von diesem Signal (CY) der Wahl des Adressiermodus gesteuert wird und an seinen Ausgängen höchster Wertigkeit bzw. niedrigster Wertigkeit während des ersten Adressiermodus die Bits der Positionen niedrigster Wertigkeit der Ausgangssignale des Binärzählers (CT) und während des zweiten Adressiermodus die Bits der Positionen höchster Wertigkeit abgibt;

—einen zweiten Multiplexer (MUX2), der von diesem Signal (CY) der Wahl des Adressiermodus gesteuert wird und an seinen Ausgängen höchster Wertigkeit bzw. niedrigster Wertigkeit während des ersten Adressiermodus die Bits der Positionen höchster Wertigkeit der Ausgangssignale des Binärzählers (CT) und während des zweiten Adressiermodus die Bits der Positionen niedrigster Wertigkeit abgibt;

—eine erste EX-OR-Logikschaltung (E1), die die Ausgangssignale der niedrigsten Wertigkeit vom ersten Multiplexer (MUX1) und vom zweiten Multiplexer (MUX2) empfängt;

—eine zweite EX-OR-Logikschaltung (E2), die die Ausgangssignale höchster Wertigkeit vom ersten Multiplexer (MUX1) und vom zweiten Mutiplexer (MUX2) empfängt;

—eine dritte EX-OR-Logikschaltung (E3), die das Ausgangssignal niedrigster Wertigkeit des zweiten Multiplexers (MUX2) und das Ausgangssignal der dritten Position in der Reihenfolge ansteigender Wertigkeit des Binärzählers (CT) empfängt;

—eine vierte EX-OR-Logikschaltung (E4), die das Ausgangssignal höchster Wertigkeit des zweiten Multiplexers (MUX2) und das Ausgangssignal der vierten Position in der Reihenfolge ansteigender Wertigkeit des Binärzählers (CT) empfängt;

—einen Binär-Dezimal-Dekoder (DEC), der die Ausgangssignale der EX-OR-Logikschaltungen empfängt, die eine vierstellige Binärzahle von der Stelle niedrigster Wertigkeit, die von der ersten EX-OR-Schaltung (E1) getragen wird, bis zur Stelle höchster Wertigkeit, die von der vierten EX-OR-Logikschaltung (E4) getragen wird, bilden, wobei der Dekoder (DEC) ausgangsseitig mit Hife von Registern (R1, ..., R16) selektive Steuersignale (CK1, ..., CK16) für Speichereinheiten (MM1, ..., MM16) abgibt;

—Halteregister (RG1, ..., RG16), die von den selketiven Steuersignalen (CK1, ..., CK16) für die Speichereinheiten (MM1, ..., MM16) angesteuert sind und als Adressen an die Speichereinheiten die Signale liefern können, die sie an ihren Eingängen empfangen, welche für alle Halteregister aus den Ausgangssignalen des Binärzählers (CT) mit Ausnahme der vier Stellen niedrigster Wertigkeit und der zwei Stellen höchster Wertigkeit und außerdem aus den Ausgangssignalen des zweiten Multiplexers (MUX2) als Stellen höherer Wertigkeit bestehen.

## Revendications

1. Méthode de mémorisation de signaux numériques tridimensionnels soumis à des transformations orthogonales le long de trois dimensions, ci-après indiquées comme horizontale, verticale et temporelle, lesdits signaux étant constitués par des échantillons numériques organisés en groupes bidimensionnels de Y échantillons le long de la dimension verticale et X échantillons le long de la dimension horizontale pour chacun des Y échantillons, où, pour la transformation le long de la dimension temporelle l'on doit avoir à disposition au même temps des échantillons de positions correspondantes qui appartiennent à Z groupes bidimensionnels successifs, en effectuant une écriture et une lecture en mémoire, caractérisée en ce que les signaux numériques

sont écrits et lus en une mémoire organisée selon une structure tridimensionnelle de mémoire composée par Z plans, chacun ayant une capacité de X · Y échantillons, selon un premier et un second mode d'adressage qui s'alternent tous les Z groupes d'échantillons; l'opération de lecture de chacun des échantillons stockés appartenant aux Z groupes précédents étant suivie par une écriture, dans la position qui vient d'être lue, de l'échantillon disponible à ce moment la et qui appartient aux Z groupes actuels; ledit premier mode adressant en séquence des positions consécutives le long de la direction croissante de chaque dimension, en donnant la priorité à la dimension horizontale suivie par la dimension verticale et temporelle des divers plans, et ledit second mode adressant en séquence des positions correspondantes des Z plans, de sorte que chaque plan est adressé dans l'ensemble Z fois, chaque fois le long de la direction croissante de chaque dimension d'un groupe, en donnant la priorité à la dimension horizontale, à partir d'un échantillon n-ième ($1 \leq n \leq Z$) et avec un pas de Z échantillons, suivie par la dimension verticale, jusqu'à ce qu'on a adressé tous les échantillons d'un plan.

2. Dispositif pour la réalisation de la mèthode de la revendication 1, caractérisé en ce qu'il comprend:

—des moyens de mémorisation (MEM) qui réalisent une structure tridimensionnelle de mémoire composée par Z plans chacun ayant une capacité de mémoriser X · Y échantillons, et qui sont constitués par une pluralité d'unités de mémoire égales (MM1...MM16), les positions de mémoire de chaque unité étant subdivisées en Z secteurs;

—des moyens d'adressage (AG) pour adresser lesdites unités de mémoire alternativement selon un premier et un second mode d'adressage, le premier mode adressant en séquence des positions consecutives le long de la direction croissante de chaque dimension en donnant la priorité à la dimension horizontale suivie par la dimension verticale et temporelle de chaque plan, et le second mode adressant en séquence des positions corespondantes des Z plans, de sorte que chaque plan est adressé Z fois, chaque fois le long de la direction croissante de chaque dimension, en donnant la priorité à la dimension horizontale, à partir d'un échantillon n-ième ($1 \leq n \leq Z$) et avec un pas de Z échantillons, suivie par la dimension verticale; les moyens d'adressage (AG), en adressant lesdites unités de mémoire, déterminant la subdivision de chaque unité de mémoire en les Z secteurs différents, et une correspondance biunivoque entre les positions du n-ième plan de mémoire et celle du n-ième secteur des unités de mémoire ($1 \leq n \leq Z$).

3. Dispositif suivant la revendication 2, caractérisé en ce que lesdites unités de mémoire (MM1...MM16) forment une matrice carrée de Z lignes et Z colonnes, et sont adressées par lesdits moyens d'adressage (AG) de manière qu'en des secteurs correspondantes des unités d'une colonne, suivant le premiére mode d'adressage, l'on peut écrire des échantillons consecutifs du même groupe et, suivant le second mode d'adressage, l'on peut écrire des échantillons de positions correspondantes de Z groupes consecutifs.

4. Dispositif suivant les revendications 2 ou 3, caractérisé en ce que pour Z=4 lesdits moyens d'adressage (AG) comprennent:

—un compteur binaire (CT) module X · Y · Z, synchronisé par la fréquence de génération des échantillons, qui fournit à chaque instant aux sorties le codage en binaire du numéro actuellement atteint dans le comptage et fournit à la sortie, chaque fois qu'il atteint la valeur maximum, un signal de fin de comptage (TC), ledit codage ne binaire étant utilisé pour l'adressage des unités de mémoiré;

—une bascule (FF1), qui opère comme un diviseur par deux dudit signal de fin de comptage, pour fournir à la sortie un signal (CY) de sélection du mode d'adressage;

—un premier multiplexeur (MUX1), commandé par ledit signal (CY) de sélection du mode d'adressage, qui fournit aux sorties respectivement la plus et la moins significative, pendant le premier mode d'adressage, les bits des positions les moins significatives des sorties dudit compteur binaire (CT) et pendant le second mode les bits des positions les plus significatives;

—un second multiplexeur (MUX2), commandé par ledit signal (CY) de sélection du mode d'adressage, qui présente aux sorties respectivement la plus et la moins significative, pendant le premier mode d'adressage, les bits des positions les plus significatives des sorties dudit compteur binaire (CT) et pendant le second mode les bits des positions les moins significatives;

—un premier circuit logique OU-Exclusif (E1) qui reçoit les sorties les moins significatives desdites premier (MUX1) et second (MUX2) multiplexeurs;

—un deuxième circuit logique OU-Exclusif (E2) qui reçoit les sorties les plus significatives desdits premier (MUX1) et second (MUX2) multiplexeurs;

—un troisième circuit logique OU-Exclusif (E3) qui reçoit la sortie la moins significative dudit second multiplexeur (MUX2) et la sortie de la troisième position, en ordre significatif croissant, dudit compteur binaire (CT);

—un quantrième circuit logique OU-Exclusif (E4) qui reçoit la sortie la plus significative dudit second multiplexeur (MUX2) et la sortie de la quatrième position, en ordre significatif croissant, dudit compteur binaire (CT);

—un décodeur binaire-décimal (DEC) qui reçoit les sorties desdits circuits logiques OU-Exclusifs, lesdites sorties constituant un numéro binaire de quatre chiffres, du moins significatif véhiculé par ledit premier circuit logique OU-Exclusif (E1) jusqu'au plus significatif véhiculé par ledit quatrième circuit logique OU-Exclusif (E4), ledit décodeur (DEC) fournissant à la sortie à l'aide de registres (R1...R16), des signaux de commande de sélection (CK1...CK16) desdites unités de mémoire (MM1...MM16);

—registres tampon (RG1,...RG16), qui sont validés par lesdits signaux (CK1...CK16) de commande de sélection des unités de mémoire (MM1...MM16), et qui fournissent comme adresses auxdites unités de mémoire les signaux qu'ils reçoivent aux entrées, lesdites signaux d'entrée étant constitués, pour tous les registres tampon, par les sorties dudit compteur binaire (CT), à l'exception des quatre positions les moins significatives et des deux les plus significatives, et par les sorties dudit second multiplexeur (MUX2) comme positions les plus significatives.

FIG. 1a

1

z

x

y

D

C

B

A

4' 4'' 4''' 4 IV 8' 8'' 8''' 8 IV 12' ------- 16' ----

3' 3'' 3''' 3 IV 7' 7'' 7''' 7 IV 11' ------- 15'

2' 2'' 2''' 2 IV 6' 6'' 6''' 6 IV 10' ------- 14' ----

1' 1'' 1''' 1 IV 5' 5'' 5''' 5 IV 9' 9'' 9''' 9 IV 13' -----

FIG. 1b

FIG. 2

0 107 203

FIG.3

FIG. 4

ADD 1

OE1

MM1

RR1

ST01

DI

DU

CK1

RW1

RU1

FIG. 5

CK1

t

RW1

OE1

FIG. 6

MM1  MM5  MM9  MM13

MM2  MM6  MM10  MM14

FIG. 7

MM3  MM7  MM11  MM15

MM4  MM8  MM12  MM16

FIG. 8